**Europäisches Patentamt**

**European Patent Office**

**Office européen des brevets**

(11) Numéro de publication : **0 286 475 B1**

# (12) FASCICULE DE BREVET EUROPEEN

(45) Date de publication du fascicule du brevet :
**13.05.92 Bulletin 92/20**

(51) Int. Cl.⁵ : **G01J 3/26,** C03B 37/14, G01D 5/26

(21) Numéro de dépôt : **88400595.0**

(22) Date de dépôt : **14.03.88**

(54) **Procédé de modification du coefficient de réflexion de l'extrémité d'une fibre optique monomode et interféromètre à fibreoptique réalisé à l'aide de ce procédé.**

(30) Priorité : **16.03.87 FR 8703548**

(43) Date de publication de la demande :
**12.10.88 Bulletin 88/41**

(45) Mention de la délivrance du brevet :
**13.05.92 Bulletin 92/20**

(84) Etats contractants désignés :
**AT BE CH DE ES FR GB GR IT LI NL SE**

(56) Documents cités :
**PATENT ABSTRACTS OF JAPAN, vol. 2, no. 124, 18 octobre 1978, page 7297 E 78; & JP-A-53 89 751
PATENT ABSTRACTS OF JAPAN, vol. 7, no. 253 (P-235)[1398], 10 novembre 1983, page 32 P 235; & JP-A-58 136 008
PATENT ABSTRACTS OF JAPAN, vol. 7, no. 10 (P-168)[1155], 14 janvier 1983, page 92 P 168; & JP-A-57 168 126
TRANSACTIONS OF THE IECE OF JAPAN, vol. E-69, no. 3, mars 1986, pages 183-186, Tokyo, JP; M. IMAI: "A fiber-optic fabry-perotreso-nator and its application to mode analysis"
PATENT ABSTRACTS OF JAPAN, vol. 9, no. 133 (P-362)[1856], 8 juin 1985, page 129 P 362; & JP-A-60 17 326**

(56) Documents cités :
**ELECTRONICS LETTERS, vol. 21, no. 11, 23 mai 1985, pages 504-505, Stevenage, Herts, GB; J. STONE: "Optical-fibre fabry-perotinter-ferometer with finesse of 300"
W. KOECHNER: "Solid-State Laser Enginee-ring", 1976, pages 171-244, Springer-Velag, New York, US**

(73) Titulaire : **ALCATEL ALSTHOM COMPAGNIE GENERALE D'ELECTRICITE
54, rue La Boétie
F-75382 Paris Cédex 08 (FR)**

(72) Inventeur : **Drahi, Patrick
71 boulevard de Picpus
F-75012 Paris (FR)**
Inventeur : **Huart, Olivier
12 rue Anatole France
F-62330 Isbergues (FR)**
Inventeur : **Begel, Jacqueline
142 Chemin Croix Rouge Fer Longpont sur Orge
F-91310 Montlhery (FR)**
Inventeur : **Chalot, Serge
6 rue du Zodiaque
F-91350 Grigny (FR)**
Inventeur : **Gabriagues, Jean-Michel
17 place A. Carrel
F-78530 Buc (FR)**

(74) Mandataire : **Weinmiller, Jürgen et al
Lennéstrasse 9 Postfach 24
W-8133 Feldafing (DE)**

**Description**

La présente invention concerne, notamment, les opérations à effectuer à l'extrémité d'une fibre optique monomode pour modifier dans un sens convenable un coefficient optique relatif à cette extrémité. Il s'agit, plus précisément, d'accroître un coefficient affectant la lumière qui se propage à l'intérieur et/ou à l'extérieur de la fibre dans la direction de celle-ci, ce coefficient s'appliquant à l'intensité d'un faisceau incident dirigé vers cette extrémité et donnant ainsi celle d'un faisceau résultant qui s'en éloigne. Ce peut être le coefficient de réflexion ou au contraire de transmission, selon les cas.

La fibre monomode en question est une fibre du type habituel qui présente un axe et qui comporte :
– un coeur constitué de silice dopée, présentant un diamètre qui permet la propagation d'une lumière selon un mode unique, et s'étendant selon ledit axe,
– une gaine optique entourant ce coeur et constituée de silice dopée différemment pour lui donner un indice inférieur à celui du coeur et confiner ainsi la lumière dans ce coeur,
– et une enveloppe de support entourant cette gaine et constituée de silice avec un dopage nul ou du moins tel que cette silice se ramollit et fond à des températures supérieures à celles de la silice des dits coeur et gaine optique, ce coeur, cette gaine et cette enveloppe constituant une masse vitreuse continue.

Pour réaliser une modification du type envisagé, un procédé connu comporte des étapes qui sont communes quant à leurs finalités propres à ce procédé connu et à la présente invention, à savoir
– une étape de formation d'une face d'extrémité sur cette fibre,
– et une étape d'adjonction à cette face d'un empilement de couches diélectriques propre à modifier ses caractéristiques de réflexion.

Dans ce procédé connu il s'agit d'obtenir un coefficient de réflexion élevé pour réaliser une interféromètre du type Perot-Fabry. La face d'extrémité est formée par clivage ou par polissage avec, dans les deux cas, des écarts inévitables par rapport à la surface optimale qui est le plan perpendiculaire à l'axe de la fibre.

L'empilement de couches diélectriques est formée sur une plaque de verre de petites dimensions qui constitue un miroir et qui est collée à l'extrémité de la fibre. On choisit une colle dont l'indice optique est voisin de celui du coeur de la fibre pour diminuer les inconvénients des écarts de la face d'extrémité par rapport au plan optimal. Il est difficile d'obtenir une couche de collage qui soit sans défaut et qui maintienne le miroir parallèlement au plan optimal avec la précision souhaitable. Ce procédé est donc coûteux en main-d'oeuvre.

Ce procédé connu est examiné dans les articles suivants de D. Marcuse - J. Stone :
– Ultrahigh finesse Fabry-Perot Interferometers",
– "Coupling efficiency of front surface and multilayer mirrors as fiber end reflectors".
(Journal of Lightwave Technology - Vol LT-4 - 4/4/1986).

Ces articles examinent aussi à titre d'alternative s'il serait possible de réaliser l'étape d'ajonction d'un empilement de couches diélectriques par dépôt direct de ces couches sur la face d'extrémité. Et ils concluent aussitôt que le coefficient de réflexion serait plus gravement affecté que dans les autres hypothèses, ceci en raison de la courbure qui apparaîtrait au polissage de la face d'extrémité avant le dépôt des couches diélectriques (p.380, colonne de gauche, deuxième paragraphe complet). Ils indiquent par ailleurs que dans ces conditions il serait extrêmement difficile de réaliser l'interféromètre (p.385 colonne de gauche).

La présente invention a notamment pour but de permettre d'agir sur le coefficient de réflexion de l'extrémité d'une fibre optique monomode, ceci d'une manière non seulement efficace, c'est-à-dire n'entraînant que de très faibles pertes, mais aussi plus économique que par le procédé connu précédemment mentionné. Elle a aussi pour but de permettre d'augmenter ce coefficient de réflexion de manière non seulement suffisante pour réaliser un interféromètre du type Fabry-Perot, mais aussi plus facile qu'avec ce procédé connu. Elle a donc en même temps pour but de diminuer le coût d'un tel interféromètre.

Et elle a notamment pour objet un procédé de modification du coefficient de réflexion de l'extrémité d'une fibre optique monomode, ce procédé s'appliquant à une fibre du type précédemment défini et comportant les étapes communes précédemment énoncées.

Par rapport au procédé connu précédemment mentionné, le procédé selon l'invention est caractérisé par le fait que ladite étape de formation d'une face d'extrémité comporte elle même une étape de clivage de ladite fibre pour former une face clivée qui est plane mais présente le plus souvent, par rapport à un plan normal audit axe, une inclinaison de clivage nuisible aux caractéristiques de réflexion recherchées,
– et au moins dans le cas de présence de cette inclinaison de clivage, une étape de chauffage bref de ladite face clivée pour au moins ramollir ladite enveloppe et fondre lesdits coeur et gaine à la surface de cette face de manière que les tensions superficielles déforment cette face et que le refroidissement consécutif fige une face déformée avec un dôme convexe en saillie dans une zone centrale formée par ces coeur et gaine, la zone plus petite qui est formée par ce coeur au centre de la surface de ce dôme étant une zone de coeur qui présente alors, par rapport à un plan normal audit axe, une inclinaison moyenne résiduelle sensiblement plus faible que ladite inclinaison de clivage,

– ladite étape d'ajonction d'un empilement de couches diélectriques étant constituée par une succession d'étapes de dépôts de couches diélectriques sur la face ainsi déformée.

Bien entendu, dans le cas exceptionnel où aucune inclinaison de clivage nuisible n'apparait, ladite étape de chauffage peut être omise.

De préférence ladite étape de chauffage est suffisamment brève pour que ladite face déformée qui en résulte conserve une inclinaison moyenne sensiblement égale à ladite inclinaison de clivage.

La présente invention a aussi pour objet un interféromètre à fibre optique qui présente les dispositions suivantes qui sont communes, quant à leurs finalités propres, à cet interféromètre et à un interféromètre connu par les articles précédemment mentionnés :

– Cet interféromètre comporte une fibre du type précédemment défini.

– Cette fibre s'étend entre deux faces d'extrémités, l'une d'entrée l'autre de sortie, à chacune desquelles est adjoint un empilement de couches diélectriques du type réfléchissant pour lui conférer un coefficient de réfléxion élevé et pour que la fibre constitue un résonateur du type Fabry-Perot.

– L'interféromètre est destiné à recevoir ladite lumière de manière qu'elle soit injectée dans ladite face d'entrée de la fibre, et il comporte des moyens pour mesurer l'amplitude de cette lumière lorsqu'elle sort par ladite face de sortie afin d'en déduire une relation entre la longueur d'onde de cette lumière et la longueur de cette fibre.

Par rapport à cet interféromètre connu, l'interféromètre selon l'invention est caractérisé par le fait que la surface de l'une au moins desdites faces d'extrémité de ladite fibre est une face déformée qui comporte un dôme formant saillie dans une zone centrale formée par lesdits coeur et gaine optique,

– ledit empilement de couches diélectriques étant constitué de couches déposées sur cette face.

De préférence la partie de la surface dudit dôme qui est formée par ledit coeur présente, par rapport à un plan normal à l'axe de la fibre, une inclinaison moyenne sensiblement inférieure à celle de ladite face déformée.

Un tel interféromètre présente l'avantage que ladite face d'extrémité peut présenter un coefficient de réflexion élevé pour la lumière du coeur de la fibre malgré des défauts d'orientation affectant éventuellement cette face.

De préférence cet interféromètre comporte comme connu en soi des moyens pour appliquer une élongation périodique à ladite fibre afin de faire varier avec la même période l'intensité de ladite lumière sortant de cette fibre. De tels moyens facilitent en effet l'utilisation de l'interféromètre dans une boucle d'asservissement destinée par exemple à maintenir la longueur d'onde de la lumière émise par un laser à semi-conducteur, une partie de cette lumière étant injectée pour cela dans la face d'entrée de ladite fibre.

L'utilisation de tels moyens soumet cette fibre à des efforts mécaniques. De plus des efforts comparables peuvent lui être appliquée dans d'autres circonstances. C'est pourquoi, de préférence et comme connu, ladite fibre est entourée, sauf à ses extrémités, par une gaine mécaniquement résistante constituée d'une matière organique synthétique.

Cependant les procédés classiques de dépôt de couches diélectriques sont réalisés à des températures incompatibles avec l'intégrité d'une telle gaine au voisinage des extrémités. C'est pourquoi, de préférence, les couches diélectriques sont constituées de sulfure de zinc et de fluorure de thorium, de manière à pouvoir être déposées à une température permettant la conservation de cette gaine en matière organique jusqu'à une faible distance des extrémités.

A l'aide des figures schématiques ci-jointes on va décrire plus particulièrement ci-après, à titre d'exemple non limitatif, comment la présente invention peut être mise en oeuvre dans le cadre de l'exposé qui en a été donné ci-dessus. Lorsqu'un même élément est représenté sur plusieurs figures il y est désigné par le même signe de référence. Le mode de mise en oeuvre décrit comporte les dispositions mentionnées ci-dessus comme préférée. Il doit être compris que les éléments mentionnés peuvent être remplacés par d'autres éléments assurant les mêmes fonctions techniques.

La figure 1 représente une vue d'ensemble d'un interféromètre selon la présente invention.

La figure 2 représente une vue en coupe d'une extrémité clivée d'une fibre optique destinée à être utilisée dans cet interféromètre et disposée horizontalement, le plan de coupe étant axial et vertical.

La figure 3 représente une vue selon le même plan de coupe de cette même fibre après déformation de sa face d'extrémité conformément au procédé selon l'invention.

La figure 4 représente une vue selon le même plan de coupe de cette même fibre après dépôt d'une couche diélectrique sur sa face déformée.

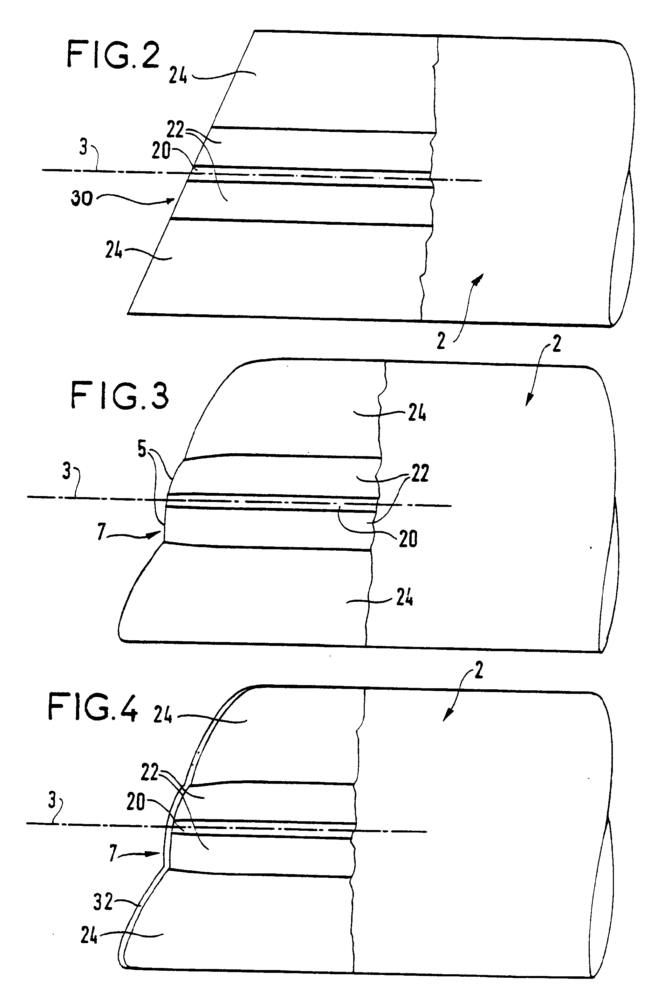

Sur les figures 2, 3 et 4 les inclinaisons et les déformations sont exagérées pour faciliter la compréhension.

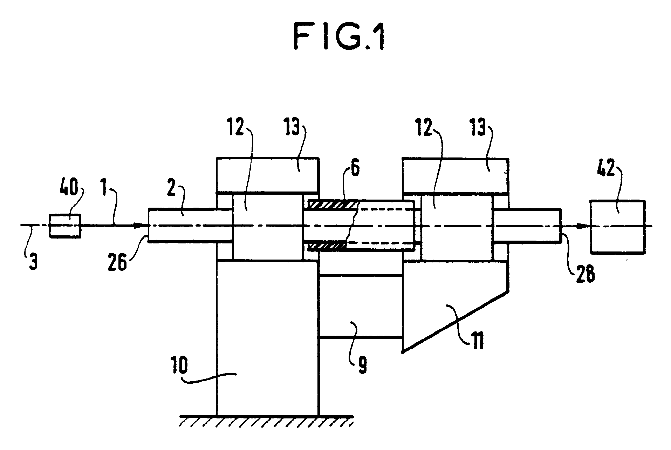

Conformément à la figure 1, le milieu de propagation de l'interféromètre est une fibre optique monomode à faible biréfringence 2 qui reçoit un rayon laser 1 selon son axe 3.

Conformément à la figure 2 cette fibre 2 comporte un coeur 20 de diamètre 8 micromètres, une gaine optique 22 de diamètre 60 micromètres, et une enveloppe de support 24 de diamètre 125 micromètres. Cette fibre est en outre munie d'une gaine synthétique 6.

Ses extrémités d'entrée 26 et de sortie 28 ont été traitées de la façon suivante :

– Tout d'abord la fibre est soigneusement clivée, ce qui permet, par exemple à l'extrémité d'entrée, d'obtenir une face clivée 30 parfaitement plane, mais dont l'orthogonalité par rapport à l'axe 3 ne peut être assez précisément réalisée.

– Ensuite un chauffage localisé de très brève durée incurve la partie la plus fusible de la fibre, c'est-à-dire le coeur 20 et la gaine 22, par le jeu des tensions superficielles. Le dôme convexe ainsi obtenu 5 renvoie la quasi-totalité de l'énergie de l'onde incidente selon l'axe 3. Il apporte ainsi une amélioration considérable en évitant la perte intolérable d'énergie qui, en son absence, aurait résulté de la réflexion sur la face 30 parce que cette face n'est pas orthogonale à la direction de propagation dans le milieu. L'ensemble de la face déformée est désigné par la référence 7.

– Enfin, pour éviter de fragiliser la fibre sur laquelle va ensuite s'exercer une élongation périodique, la gaine synthétique 6 est conservée sauf au voisinage des extrémités. Le traitement quine peut alors se dérouler à des températures trop élevées, utilise des couches diélectriques qui peuvent adhérer à la surface de la fibre pour des températures plus modérées. Alternativement sont ainsi déposées, par rayonnement sous vide depuis des creusets indépendants à effet Joule, des couches à haut indice de ZnS, puis des couches à bas indice de ThF$_4$, les première et dernières couches étant en ZnS. La première couche déposée est représentée en 32 sur la figure 4. Un tel procédé fournit le contrôle parfait de l'épaisseur des couches déposées et assure de plus un profil final de la face traitée identique à celui précédant le traitement. Ainsi, vis-à-vis de la lumière qui se propage dans la fibre, les extrémités forment deux miroirs concaves traités à haute réflectivité qui renvoient les rayons selon l'axe 3, ceci lors de multiples réflexions.

Un transducteur à microdéplacement à céramique piézoélectrique 9 est porté par un bâti fixe 10 et porte lui-même un bâti mobile 11 auquel il imprime un mouvement alternatif. Ce transducteur est alimenté par une tension périodique en rampe linéaire, alternativement croissante puis décroissante : Par rapport au bâti 10 le bâti 11 s'écarte, puis se rapproche.

La fibre est par exemple collée, sur sa partie dégaînée, dans des capillaires en verre 12, eux-mêmes maintenus par les mâchoires respectives 13 des deux bâtis 10 et 11. Une autre solution consisterait à métalliser préalablement sa surface externe pour la souder aux deux bâtis.

La lumière injectée dans la face d'entrée 26 peut être une fraction de celle qui est émise par un laser à semi-conducteur 40 incorporé dans un dispositif de télécommunications. La lumière qui traverse la face de sortie 28 est reçue sur un dispositif de mesure 42 qui peut, par exemple, agir sur ce laser pour en asservir la fréquence.

Dans un cas particulier pouvant servir d'exemple on peut donner les précisions suivantes :

La coeur 20 a un diamètre de huit micromètres.

La gaine 22 a un diamètre de soixante micromètres et un indice de réfraction égal à celui du coeur diminué de 0,005.

l'enveloppe 24 est constituée de silice pure.

L'angle d'inclinaison acceptable pour la face clivée est de 0,5 degrés.

Le chauffage de l'extrémité de la fibre est effectué dans un plasma qui est créé par un arc électrique entre deux électrodes polies.

Durée du chauffage : 0,25 seconde.

La face déformée est contrôlee par interférométrie microscopique (observation des anneaux de Newton).

Angle d'inclinaison résiduel en regard du coeur 20 : moins de 0,1 degré.

Coefficient de réflexion obtenu : 99,5% à la longueur d'onde pour laquelle ont été déterminés les paramètres du traitement diélectrique.

## Revendications

1. Procédé de modification du coefficient de réflexion de l'extrémité d'une fibre optique monomode, ce procédé s'appliquant à une fibre qui présente un axe (3) et qui comporte :

– un coeur (20) constitué de silice dopée, présentant un diamètre qui permet la propagation d'une lumière selon un mode unique, et s'étendant selon ledit axe (3),

– une gaine optique (22) entourant ce coeur et constituée de silice dopée différemment pour lui donner un indice inférieur à celui du coeur et confiner ainsi la lumière dans ce coeur,

– et une enveloppe de support (24) entourant cette gaine et constituée de silice avec un dopage nul ou au moins tel que cette silice se ramollit et fond à des températures supérieures à celles de la silice des dits coeur et gaine optique, ce coeur, cette gaine et cette enveloppe constituant une masse vitreuse continue,

– ce procédé comportant une étape de formation d'une face d'extrémité sur cette fibre,

– et une étape d'adjonction à cette face d'un empilement de couches diélectriques pour modifier ses caractéristiques de réflexion,

– ce procédé étant caractérisé par le fait que ladite étape de formation d'une face d'extrémité comporte elle même une étape de clivage de ladite fibre pour former une face clivée (30) qui est plane mais présente le plus souvent, par rapport à un plan normal audit axe (3), une inclinaison de clivage nuisible aux caractéristiques de réflexion recherchées,

– et, au moins dans le cas de présence de cette inclinaison de clivage, une étape de chauffage bref de ladite face clivée pour au moins ramollir ladite enveloppe (24) et fondre lesdits coeur (20) et gaine (22) à la surface de cette face de manière que les tensions superficielles déforment cette face et que le refroidissement consécutif fige une face déformée (7) avec un dôme convexe (5) en saillie dans une zone centrale formée par ces coeur et gaine, la zone plus petite qui est formée par ce coeur au centre de la surface de ce dôme étant une zone de coeur qui présente alors, par rapport à un plan normal audit axe, une inclinaison moyenne résiduelle sensiblement plus faible que ladite inclinaison de clivage,

– ladite étape d'ajonction d'un empilement de couches diélectriques étant constituée par une succession d'étapes de dépôts de couches diélectriques (32) sur la face (7) ainsi déformée ou éventuellement, en l'absence d'inclinaison de clivage nuisible, sur ladite face de clivage.

2. Procédé selon la revendication 1, caractérisé par le fait que ladite étape de chauffage est suffisamment brève pour que ladite face déformée (7) qui en résulte conserve une inclinaison moyenne sensiblement égale à ladite inclinaison de clivage.

3. Procédé selon la revendication 1, destiné à augmenter la coefficient de réflexion de ladite extrémité de la fibre, ledit empilement de couches diélectriques (32) étant un empilement du type réfléchissant.

4. Interféromètre à fibre optique, cet interféromètre comportant,

– une fibre optique monomode (2) qui présente un axe (3) et qui comporte :

– un coeur (20) constitué de silice dopée, présentant un diamètre qui permet la propagation d'une lumière selon un mode unique, et s'étendant selon ledit axe (3),

– une gaine optique (22) entourant ce coeur et constituée de silice dopée différemment pour lui donner un indice inférieur à celui du coeur et confiner ainsi la lumière dans ce coeur,

– et une enveloppe de support (24) entourant cette gaine et constituée de silice avec un dopage nul ou au moins tel que cette silice se ramollit et fond à des températures supérieures à celles de la silice des dits coeur et gaine optique, ce coeur, cette gaine et cette enveloppe constituant une masse vitreuse continue,

– cette fibre s'étendant entre deux faces d'extrémités l'une d'entrée (26) l'autre de sortie (28), à chacune desquelles est adjoint un empilement de couches diélectriques du type réfléchissant pour lui conférer un coefficient de réflexion élevé et pour que la fibre constitue un résonateur du type Fabry-Perot,

– cet interféromètre étant destiné à recevoir ladite lumière de manière qu'elle soit injectée dans ladite face d'entrée (26) de la fibre, et comportant des moyens (42) pour mesurer l'amplitude de cette lumière lorsqu'elle sort par ladite face de sortie (28) afin d'en déduire une relation entre la longueur d'onde de cette lumière et la longueur de cette fibre (2),

– cet interféromètre étant caractérisé par le fait que la surface de l'une au moins desdites faces d'extrémité de ladite fibre est une face déformée (7) qui comporte un dôme (5) formant saillie dans une zone centrale formée par lesdits coeur (20) et gaine optique (22),

– ledit empilement de couches diélectriques étant constitué de couches (32) déposées sur cette face déformée.

5. Interféromètre selon la revendication 4, caractérisé par le fait que la partie de la surface dudit dôme (5) qui est formée par ledit coeur (20) présente, par rapport à un plan normal à l'axe (3) de la fibre (2), une inclinaison moyenne sensiblement inférieure à celle de ladite face déformée (7).

**Patentansprüche**

1. Verfahren zum Verändern des Reflexionskoeffizienten des Endes einer Monomodefaser, angewendet auf eine Faser mit einer Achse (3) und mit folgenden Komponenten:

– einem Kern (20) aus dotiertem Siliziumdioxid mit einem Durchmesser, welcher die Fortpflanzung eines Lichtstrahls gemäß einem einzigen Mode ermöglicht, wobei der Kern sich in Richtung der Achse (3) erstreckt,

– einer optischen Hülle (22), die den Kern umgibt und aus anders dotiertem Siliziumdioxid besteht, um ihr einen kleineren Brechungsindex als dem Kern zu verleihen und so das Licht im Kern einzuschließen,

– und einem Stützmantel (24), der die Hülle umgibt und aus nicht dotiertem oder mindestens aus derart dotiertem Siliziumdioxid besteht, daß es bei Temperaturen oberhalb der Erweichungstemperatur des Siliziumdioxids des Kerns und der optischen Hülle erweicht und schmilzt, wobei der Kern, die Hülle und der Mantel eine durchgehende glasige Masse bilden,

– wobei das Verfahren einen Schritt der Ausbildung einer Endfläche an der Faser aufweist,

– und wobei es einen Schritt des Anbringens einer Schichtung von dielektrischen Überzügen auf der Fläche zur Veränderung ihrer Reflexionseigenschaften aufweist,

– dadurch gekennzeichnet, daß der Schritt zur Herstellung einer Endfläche seinerseits einen Schritt des Spaltens der Faser aufweist, um eine Trennfläche (30) zu schaffen, die eben ist, aber in den meisten Fällen in Bezug auf eine normal zur Achse (3) stehende Ebene, eine den angestrebten Reflexionseigenschaften abträgliche Spalt-Schräglage besitzt,

– worauf zumindest bei Vorhandensein der Spalt-Schräglage ein Schritt des kurzen Erwärmens der Trennfläche vorgesehen ist, um die Hülle (24) mindestens zu erweichen und den Kern (20) sowie den Mantel (22) an der Oberfläche zu schmelzen, derart, daß die Oberflächenspannungen die Fläche verformen und die anschließende Abkühlung eine verformte Fläche (7) zu einer konvexen Kuppe (5) erstarren läßt, die in einer zentralen Zone bestehend aus Kern und Hülle vorsteht, wobei die durch den Kern in der Mitte der Fläche der Kuppe gebildete kleinere Zone eine Kernzone ist, die dann in Bezug auf eine Normalebene zur Achse eine mittlere Restschräglage besitzt, welche wesentliche schwächer als die Spalt-Schräglage geneigt ist,

– wobei der Schritt des Anbringens einer Schichtung von dielektrischen Überzügen aus einer Folge von Schritten des Auftragens dielektrischer Überzüge (32) auf der so verformten Fläche (7), oder, gegebenenfalls, bei Fehlen der abträglichen Spalt-Schräglage, auf der Spaltfläche besteht.

2. Verfahren nach Anspruch 1, dadurch gekennzeichnet, daß der Erwärmungsschritt genügend kurz ist, damit die daraus hervorgehende verformte Fläche (7) eine mittlere Schräglage behält, die im wesentlichen der Spalt-Schräglage entspricht.

3. Verfahren nach Anspruch 1, dazu bestimmt, den Reflexionskoeffizienten des Endes der Faser zu erhöhen, wobei die Schichtung der dielektrischen Überzüge (32) eine reflektierende Schichtung ist.

4. Interferometer mit Lichtleitfaser, bestehend aus:

– einer Monomodelichtleitfaser (2), die eine Achse (3) besitzt und folgende Komponenten aufweist:

– einem Kern (20) aus dotiertem Siliziumdioxid, der einen urchmesser besitzt, welcher die Fortpflanzung eines Lichtstrahls gemäß einer einzigen Mode ermöglicht, wobei der Kern sich in Richtung der Achse (3) erstreckt,

– einer optischen Hülle (22), die den Kern umgibt und aus anders dotiertem Siliziumdioxid besteht, um ihr einen kleineren Brechungsindex als dem Kern zu verleihen und so das Licht in den Kern einzuschließen,

– einem Stützmantel (24), der die Hülle umgibt und aus nicht dotiertem oder mindestens aus derart dotiertem Siliziumdioxid besteht, daß es bei Temperaturen oberhalb der Erweichungstemperatur des Siliziumdioxids des Kerns und der optischen Hülle erweicht und schmilzt, wobei der Kern, die Hülle und der Mantel eine durchgehende glasige Masse bilden,

– wobei sich die Faser zwischen zwei Endflächen, einer Eintrittsfläche (26) und einer Austrittsfläche (28) erstreckt und an jeder von ihnen eine Schichtung aus reflektierenden dielektrischen Überzügen angebracht ist, um den Flächen einen erhöhten Reflexionskoeffizienten zu verleihen und aus der Faser einen Fabry-Perot-Resonator zu machen,

– wobei das Interferometer dazu bestimmt ist, das Licht in der Weise zu empfangen, daß es in die Eintrittsfläche (26) der Faser eingestrahlt wird, und wobei es Mittel (42) zum Messen der Amplitude des Lichts aufweist, wenn das Licht aus der Austrittsfläche (28) hervortritt, um daraus eine Beziehung zwischen der Wellenlänge des Lichts und der Länge der Faser (2) abzuleiten,

– wobei das Interferometer dadurch gekennzeichnet ist, daß die Oberfläche mindestens einer der Endflächen der Faser ein verformte Fläche (7) ist, die eine Kuppe (5) aufweist, welche in einer vom Kern (20) und von der optischen Hülle (22) gebildete Zentralzone vorsteht,

– wobei die Schichtung der dielektrischen Überzüge aus Lagen (32) besteht, die auf diese verformte Fläche aufgetragen sind.

5. Interferometer nach Anspruch 4, dadurch gekennzeichnet, daß der Abschnitt der Oberfläche der Kuppe (5), der durch den Kern (20) gebildet wird, eine in Bezug auf eine normal zur Achse (3) der Faser (2) stehende Ebene mittlere Schräglage besitzt, die wesentlich schwächer als diejenige der verformten Fläche (7) geneigt ist.

# Claims

1. Method of modifying the coefficient of reflection of the end of a monomode optical fibre, said method applying to a fibre which has an axis (3) and which comprises:

– a doped silica core (20) having a diameter enabling propagation of light in a single mode along said axis (3),

– an optical sheath (22) around said core and formed by silica doped differently to give it a lower index than the core and therefore to confine the light within the core, and

– a supporting jacket (24) surrounding said sheath and formed by silica with no doping or doping at least such that the silica softens and melts at temperatures higher than the silica of said core and optical sheath, said core, said sheath and said jacket constituting a continuous vitreous mass,

– said method comprising a stage in which an end face is formed on said fibre,

– a stage in which a stack of dielectric layers is added to said face to modify its reflection characteristics,

– said method being characterised in that said step of forming an end face itself comprises a step of cleaving said fibre to form a cleaved face (30) which is plane but which usually has a cleaving inclination relative to a plane normal to said axis (3) which compromises the required reflection characteristics,

– and at least in the case where said cleaving inclination is present, a stage in which said cleaved face is heated briefly at least to soften said jacket (24) and to melt said core (20) and sheath (22) at the surface of said face in such a way that the surface tensions deform said face and that the subsequent cooling sets a deformed face (7) with a convex dome (5) projecting in a central area formed by said core and sheath, the smaller area which is formed by said core at the centre of the surface of said dome being a core area which then has, relative to a plane normal through said axis, a residual mean inclination substantially smaller than said cleaving inclination,

– said stage of adding a stack of dielectric layers being formed by a succession of stages of depositing dielectric layers (32) onto the deformed face (7), or, if there is no adverse cleavage inclination, to said cleaved face.

2. Method according to claim 1, characterised in that said heating stage is sufficiently brief for the resulting deformed face (7) to retain a mean inclination substantially equal to said cleaving inclination.

3. Method according to claim 1, adapted to increasing the coefficient of reflection of said end of the fibre, said stack of dielectric layers (32) being a reflective type stack.

4. Optical fibre interferometer comprising:

– a monomode optical fibre (2) which has an axis (3) and which comprises:

– a doped silica core (20) having a diameter enabling propagation of light in a single mode along said axis,

– an optical sheath (22) around said core and formed by silica doped differently to give it a lower index than the core and therefore to confine the light within the core, and

– a supporting jacket (24) surrounding said sheath and formed by silica with no doping or doping at least such that the silica softens and melts at temperatures higher than the silica of said core and optical sheath, said core, said sheath and said jacket constituting a continuous vitreous mass,

– said fibre extends between two end faces, an entry face (26) and an exit face (28), to each of which is-added a stack of reflective dielectric layers to give it a high coefficient of reflection and so that the fibre constitutes a Fabry-Perot type resonator,

– the interferometer is adapted to receive said light in such a way that it is injected into said entry face (26) of the fibre, and it comprises means (42) for measuring the amplitude of said light when it leaves via said exit face (28) in order to deduce a relationship between the wavelength of said light and the length of said fibre (2),

– said interferometer being characterised in that the surface of at least one end face of said fibre is a deformed face (7) which comprises a dome (5) forming a projection in a central area formed by said core (20) and optical sheath (22),

– said stack of dielectric layers being in the form of layers (32) deposited on said face.

5. Interferometer according to claim 4, characterised in that the part of the surface of said dome (5) which is formed by said core (20) preferably has a mean inclination relative to a plane normal to the axis (3) of the fibre (2) substantially less than that of said deformed face (7).

# FIG.1

FIG.2

FIG.3

FIG.4